# EUROPEAN PATENT APPLICATION

(11) **EP 3 444 171 A1**
(43) Date of publication of application: **20.02.2019**
(21) Application number: 17186747.6
(22) Date of filing: 17.08.2017
(51) Int. Cl.: B62D 25/24

(54) **CLOSING PLUG FOR CLOSING AN OPENING AND ARRANGEMENT WITH A CLOSING PLUG**

(71) Applicant: Newfrey LLC, New Britain, CT 06053 (US)
(72) Inventor: Gerlach, Wolfgang, 35394 Gießen (DE); Schmidt, Michael, 35394 Gießen (DE)
(74) Representative: SBD IPAdmin

(57) **Abstract**

Closing arrangement comprising a closing plug (10) and closing plug (10) for sealingly closing an opening (O), comprising a main body (14) with a bottom (20), a collar (22), a folding section (24) extending between the bottom (20) and the collar (22), a sealing element (16), wherein the sealing element (16) is overmolded on the main body (14). The sealing element (16) comprises a first sealing section (S1) and a second sealing section (S2), the first sealing section (S1) extending at least partially on the rear surface, and the second sealing section (S2) being provided on the supporting portion (38) of the collar (22). The closing plug (10) further comprises a locking system (18) having a first locking element (66) provided on the bottom (20) and a second locking element (68) connected to the outer ring (40) and/or the folding section (24). The bottom (20) is movable relative to the collar (22) along the longitudinal axis (X) between a mounting position in which the second sealing section (S2) has a mounting diameter, and an expansion position in which the second sealing section (S2) has an expansion diameter, said expansion diameter being larger than said mounting diameter.

## Description

The invention relates to closing plugs for closing openings, in particular for closing an opening provided in a body structure of an automobile. The invention further relates to an arrangement comprising a closing plug and a body structure with an opening. Coating processes are frequently used for car bodies. During such process, body structures of cars are immersed in coating baths (for example electro coat tanks). This coat protects the car's body structures in particular from corrosion. It can also provide a base for applying subsequent paint layers. Upon removal of the body structure from the coating bath, the liquid coating material runs off over a plurality of openings formed in the body structure. These openings then have to be closed in a sealed manner in order to avoid ingress of water or dirt, and associated damage to the body structure, during subsequent manufacturing steps, or even during operation of the car. Furthermore, these openings have to be closed in a sealed manner since they may constitute so-called sound bridges. To this end, closing plugs are used. More particularly, each opening is closed by a closing plug.

It is known several closing plugs from the state of the art.

DE 10 2009 057 750A1 discloses a closing plug having a shank body and, at opposite ends of the shank body, circumferential flanges formed integrally therewith. When inserted into an opening, the shank body passes partially through the opening, such that one of the flanges bears against a first body side and the other of the flanges bears against the opposite other body side. A circumferential ring made of expanded hot-melt adhesive material is arranged on the flanges in each case on the side that bears against the body. The hot-melt adhesive material melts by heating and sealingly bonds the respective flange to the body.
In terms of tooling, the known closing plug is complicated to produce and to implement. Besides, high mounting forces can arise. Furthermore, the configuration of the closing plug does not allow its utilization with different sheet metal thicknesses.
Also known are closing plugs which ensure sealing only on one side of the body part. These may be used with different sheet metal thicknesses. However, such closing plugs do not always lead to sufficient protection against water ingress during operation, and so damage to the body, in particular to the rim bounding the opening, can occur. WO2015187239A1 discloses a closing plug comprising a bottom part and a top part which can be connected to the bottom part, wherein the bottom part has a latching section with a connecting receptacle. The latching section can be inserted into the opening, and the top part has a connecting section which can be inserted into the connecting receptacle. The connecting receptacle and/or the connecting section have/has holding means which hold the connecting section in the connecting receptacle. Furthermore, the top part has a cover section which extends starting from one end of the connecting section. The latching means are covered at least partially by an annularly circumferential hot-melt adhesive material which, after heating, sealingly encloses the opening edge which delimits the opening in the state in which said latching means are latched at the opening.
Closing plugs of this type are dependent from the temperature, since the hot-melt adhesive material has to be heated. This dependence from the temperature may imply strict heating processes. This reduces the adaptability of the closing plugs and complicates their implementation. Besides, these sealing plugs extends well above the diameter of the opening and the sealing interface is realized on the side of the car body, which might decrease their sealing performances.
Other closing plugs independent from the temperature or having a radial sealing exist. Document DE102007026544 discloses a closing plugs having at least two different components, and one of the component comprises an expansion element. The expansion element is secured in a locked position through a locking structure. The locking structure comprises three parts which cooperate together to move the expansion element in the locked position.
The locking structure of such closing plugs are complex to manufacture and to manipulate. Furthermore, the mounting of such closing plugs in the locked position might require high mounting forces.
Document US2015135598A1 shows a closing plug for closing an opening, which includes an annular sealing section adapted to rest against an edge of the opening. The closing plug further has an expansion section which is formed in one piece with the sealing section and can be adjusted from a mounting position, in which the sealing section has a mounting diameter at least at one axial end, to an expansion position, in which the sealing section has a larger diameter, the sealing section being axially biased outwardly by transferring the expansion section from the mounting position into the expansion position.
Such closing plugs are difficult to manufacture due to their complex geometry.

The object of the present invention is to go some way towards solving or at least mitigating the problems set out above. The invention aims to provide a robust and compact closing plug suited to a large range of body structures with a good sealing effect and easy to manufacture and easy to use manually or automatically.
It is also a goal of the present invention to provide a robust sealing arrangement.
To this aim, according to the invention, it is provided a closing plug for sealingly closing an opening, in particular an opening provided in a body structure of an automobile, comprising a main body with a bottom, a collar with a supporting portion extending along a longitudinal axis and an outer ring with a rear surface adapted to face the body structure and a top surface opposite the rear surface, wherein the collar surrounds the bottom, a folding section extending between the bottom and the collar; a sealing element, wherein the sealing element is overmolded on the main body, wherein the sealing element comprises a first sealing section and a second sealing section, wherein the first sealing section extends at least partially on the rear surface, and wherein the second sealing section is provided on the supporting portion of the collar; a locking system having a first locking element provided on the bottom and a second locking element provided on the outer ring and/or the folding section. The bottom is movable relative to the collar along the longitudinal axis between a mounting position, in which the second sealing section has a mounting diameter, and the first locking element is at a non-zero distance of the second locking element, and an expansion position, in which the bottom exerts through the folding section a radial force on the collar and in which the second sealing section has an expansion diameter, said expansion diameter being larger than said mounting diameter, and the first locking element cooperate with the second locking element to secure the expansion position. Such closing plug is easy to manufacture and easy to use. It can be manually or automatically mounted or operated, allowing flexibility. Furthermore, such closing plug could be easily unmounted if needed and once in the locking position, it is securely maintained in the opening. Such closing element has good sealing performance. The sealing element is adapted to be arranged in the opening and radially extends in the opening through the increased diameter of the collar in the expansion position, to provide a radial sealing. The sealing is thus provided on the wall (or edge) defining the opening. The sealing surface is therefore extended to the wall defining the opening, which allows a good compactness of the closing plug without decreasing the sealing performances.

In some embodiments, the folding section comprises a plurality of segment extending from the bottom to the collar and separated by slots. The segments allow a good repeatability of the folding. Besides, the folding section can thus be easily overmolded on both side by the sealing element if necessary. Finally, the segment allow to reduce the general weight of the closing plug.

In some embodiments, each segment has a constant length and a variable width. This provide a rotational symmetrical profile of the main body and allow an easier manipulation. Besides, the variable width allow to ensure the robustness and the reliability of the main body.

In some embodiments, the segment longitudinally extends in a direction non parallel to the longitudinal axis. For example, the segment can extend in a direction non perpendicular to the longitudinal axis. In other embodiments, the direction of extension of the segments can be perpendicular to the longitudinal axis.

In some embodiments, the sealing element comprises a cover portion which covers the slots provided between the segments. The cover portion formed a sealed envelope. The sealing element entirely covers the slots, to provide an impermeable layer. The cover portion may extend above or inside the slots.

In some embodiments, the cover portion covers the slots extending longitudinally along a radial direction, the section of the cover portion being variable along the radial direction between the bottom and the collar. The radial direction can be the direction of extension of the segment (or segment direction), for example.

In some embodiments, the section of the cover portion proximate to the bottom extends at least partially in the slot.

In some embodiments, the section of the cover portion proximate to the collar is arc-shaped and extends above the slot. The section of the cover portion proximate to the collar does not extend in the slot. The cover portion forms a fold which allows an elastic expansion or deformation.

In some embodiments, the sealing element is in a first material, the main body is in a second material, the first material being more flexible than the second material. For example, the material of the sealing element is for example a silicone or a material with similar properties and the material of the main body is a thermoplastic material. More particularly, the sealing element can be stretched and is flexible enough to not break when the bottom moves from the mounting position to the expansion position. The main body is rigid enough to provide a secure closing.

In some embodiments, the second locking element comprises a locking section and a holding section, wherein the first locking element comprises a receiving track, wherein in the expansion position the receiving track cooperates with the holding section and the locking section to secure the position of the first and second locking elements. Thus, the position of the first locking element with regard to the second locking element is defined through the holding section and then secured through the locking section. In some embodiments, the outer ring comprises an arc-shaped section and define an annular groove. The arc-shaped section increases the sealed capability of the closing plug.

In some embodiments, the first sealing section entirely fill the annular groove. The first sealing section projects beyond the annular groove.

In some embodiments, the folding section extends between the bottom and the outer ring. The rigidity of the main body is increased.

In some embodiments, the bottom has a circular general shape with a first surface and a second surface opposite the first surface, wherein the first surface is provided with the first locking element, and wherein the second surface is at least partially overmoulded by the sealing element. The sealing element does not interfere with the first locking element.

In some embodiments, the first sealing section comprises an annular protrusion. The protrusion improves the sealing.

In some embodiments, the bottom is axially offset along the longitudinal axis from the collar in the mounting position. The offset allows an easiest manipulation of the bottom to move it between the mounting position and the expansion position.

In some embodiments, the supporting portion comprises an inner surface facing the bottom and an outer surface opposite the inner surface, and wherein the sealing element is overmoulded on the outer surface.

In some embodiments, the sealing element is overmoulded on the inner surface.

According to another embodiment of the invention there is provided a closing arrangement with a closing plug as described below. The closing arrangement comprises a body structure, wherein the body structure comprises a first surface, a second surface opposite the first surface and an opening, wherein the closing plug extends in the opening, wherein the first sealing section is facing the first surface, and wherein the second sealing section is facing the edges of the opening.

Such arrangement can be easily implemented.

In some embodiment, a hook can be provided at one end of the supporting portion or at the interface between the supporting portion and the folding section in order to further secure the closing plug with the body structure. The hook can thus lock the position of the closing plug. The body structure is sandwiched between the hook and the sealing element of the collar.

The method to install the closing plug described above is for example as follow: the closing plug is inserted in an opening with the bottom being in the mounting position, a force is applied on the collar such as to push the first sealing section against a surface of a body structure, then a force is applied on the bottom to move the bottom from the mounting position to the locking position.

Other characteristics and advantages of the invention will readily appear from the following description of embodiments, provided as non-limitative examples, in reference to the accompanying drawings.

In the drawings:
Fig. 1 shows a rear side of a closing plug according to the present invention with a main body and a sealing element;
Fig. 2A is a sectional view along the axis A-A of the sealing element and a portion of the main body of Fig. 1;
Fig. 2B is a sectional view along the axis B-B of the sealing element and a portion of the main body of Fig. 1;
Fig. 2C is a sectional view along the axis C-C of the sealing element and a portion of the main body of Fig. 1;
Fig. 3 shows a front side of the closing plug of Fig. 1;
Fig. 4A shows a cross section of the closing plug of Fig. 1 inserted in an opening of a body structure with a bottom in a mounting position;
Fig. 4B shows a cross section of the closing plug of Fig. 1 inserted in an opening of a body structure with a bottom in an expansion position;
Fig. 5 shows a cross section of an alternative embodiment of the closing plug according to the invention with a bottom in a mounting position
Fig. 6 shows a cross section of the closing plug of Fig. 5 with the bottom in an expansion position;
Fig. 7 shows a front side of an alternative embodiment of the closing plug according to the invention;
Fig. 8 shows a cross section of the closing plug of Fig. 7 in an opening with a bottom in a mounting position;
Fig. 9 shows a rear side of the closing plug of Fig. 7;
Fig. 10 shows a front side of an alternative embodiment of the closing plug according to the invention;
Fig. 11 shows a cross section of the closing plug of Fig. 10 with a bottom in a mounting position;
Fig. 12 shows the rear side of the closing plug of Fig. 10;
Fig. 13A is a detailed view of the closing plug of Fig. 10 with the bottom in the mounting position;
Fig. 13B is the same detailed view than Fig. 13A with the bottom in a locking position;
Fig. 14A and Fig. 14B are two alternative embodiments of the closing plug of Fig. 11 respectively in the mounting position of the bottom and in the locking position of the bottom, with a hook provided on the main body;
Fig. 15 is a detailed view of a locking system of a closing plug according to the invention;
Fig. 16A and Fig. 16B are schematic views of an automatic installation of a closing plug according to the invention.
On the different figures, the same reference signs designate identical or similar elements.

A closing plug 10 according to the present invention comprises a main body 14, a sealing element 16 and a locking system 18. The closing plug 10 is adapted to be inserted in an opening O of a body structure 100. The closing plug 10 is then firmly held or secure in the opening O. The closing plug 10 is used for tight closure of the opening O.

The main body 14 comprises a bottom 20, a collar 22 and a folding section 24. For example, the main body 14 is a one-piece part. The main body 14 may be manufactured as a one-piece injection molded part. The main body 14 is for example made in thermoplastic material.

The bottom 20 is substantially flat with a first surface 26 and a second surface 28 opposite the first surface 26. The bottom defines a bottom plan. The bottom 20 comprises for example a disc shape, as represented in the figures. However, in alternative embodiments other shapes such as a square, rectangular ... shapes may be considered. More particularly the shape of the bottom is adapted to allow an easy manipulation.

The folding section 24 extends from the edge of the bottom 20. In particular, as represented in the figures, the folding section 24 extends from the circular outer edge of the bottom. For example, as illustrated, the folding section 24 surrounds the bottom 20. The folding section 24 may comprise a plurality of segments 30.

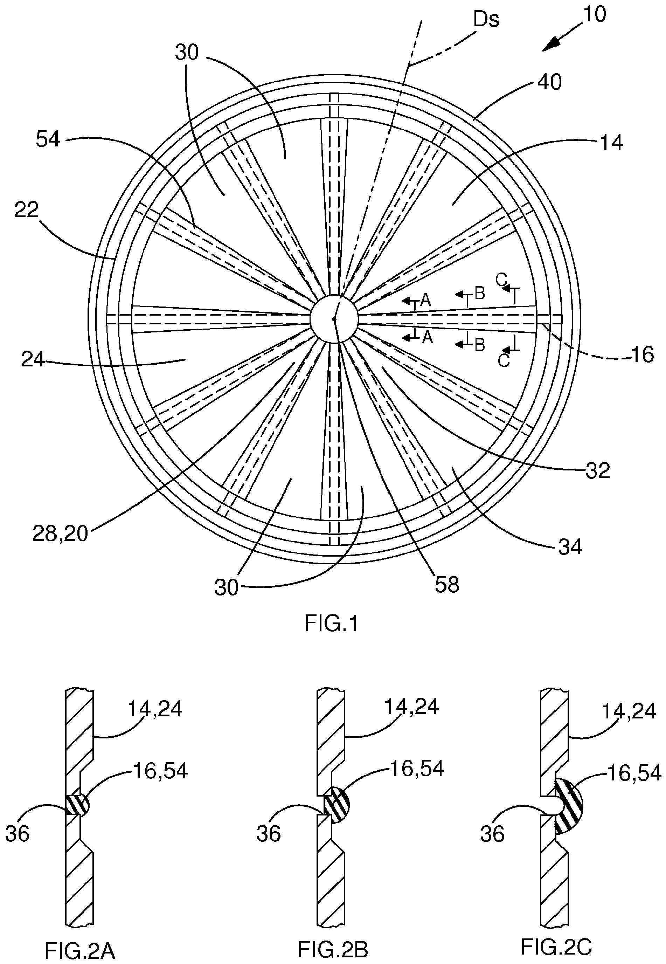

The segments 30 extends from the edge of the bottom 20. The segments 30 are for example equally distributed around the bottom 20. As illustrated in Fig. 1, Fig. 3, Fig. 7, Fig. 9, Fig. 10 or Fig. 12, twelve segments 30 may be provided. In other embodiments, more or less segments may be provided. The segments 30 are for example identical. Each segment 30 extends in a segment direction Ds and away from the bottom 20 between a first end portion 32 located at the edge of the bottom 20 and a second end portion 34. The segment direction Ds and the bottom plan form a non-zero angle, such that the second end portion 34 does not extend in the bottom plan. Each segment 30 comprises an identical and constant length along the segment direction Ds. The width of the segment 30 is variable along the segment direction Ds. More particularly, the width of the first end portion 32 is less than the width of the second end portion 34. In other words, the segment 30 widens from the first end portion 32 toward the second end portion 34 along the segment direction Ds.

Two adjacent segments 30 are separated by a slot 36. The folding section 24 is thus provided with a plurality of slots 36. The slots 36 are identical. In alternatives embodiments (not shown), the segments and the slots may not be identical or uniformly distributed. The height of the segment 30 can be constant or the edge of the segments along the slots can have a smaller height than the rest of the segment, as visible in Fig. 2A to Fig. 2C.

The collar 22 extends from the second end portion 34. The collar 22 surrounds the folding section 24 and surrounds the bottom 20. The collar 22 has a supporting portion 38 and an outer ring 40.

The supporting portion 36 of the collar 22 extends along a longitudinal axis X. The longitudinal axis X is for example orthogonal or substantially orthogonal to the bottom plan. The longitudinal axis X and the segment direction Ds form a non-zero angle. The supporting portion 38 extends from the second end portion 34 of the segments 30. Said supporting portion 38 comprises an inner surface 42 facing the segments 30 and an outer surface 44 opposite the inner surface. The outer surface 44 is destined to face the edge of the opening O when the closing plug is provided in the opening O.

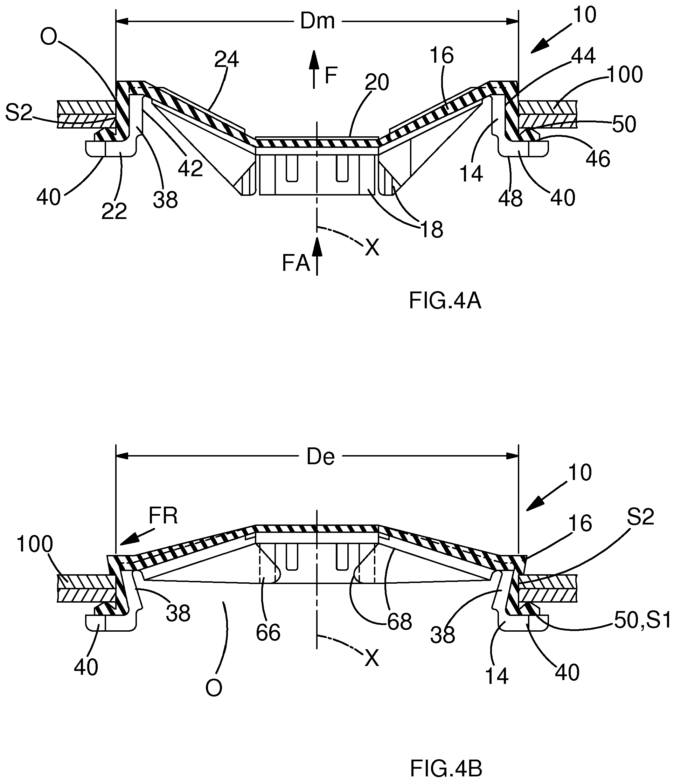

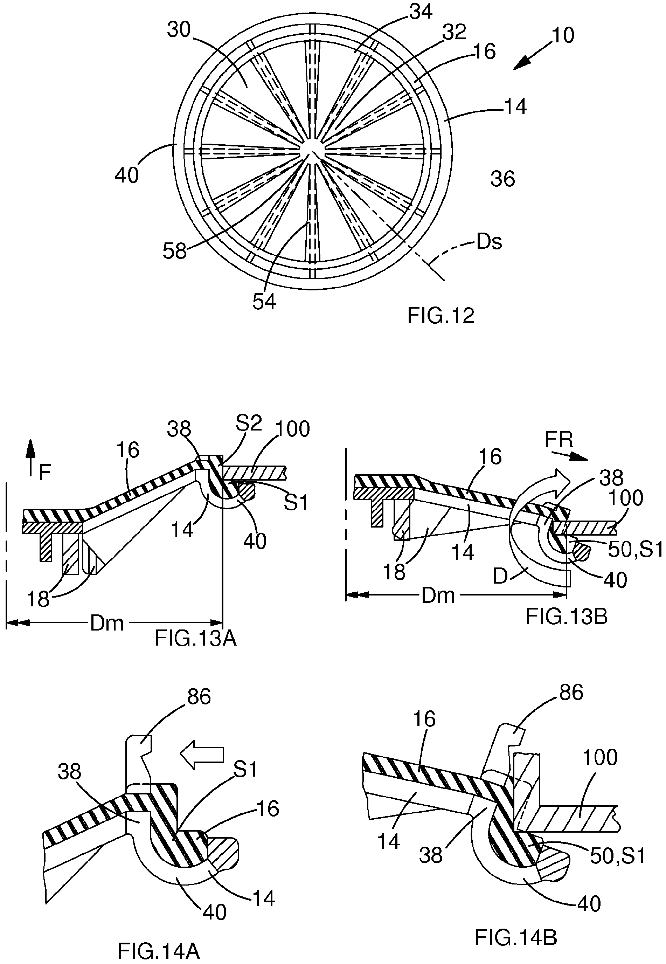

The outer ring 40 is provided at an end of the supporting portion 38. For example, the outer ring 40 surrounds entirely and continuously the supporting portion 38. The outer ring 40 may extend substantially perpendicular to the longitudinal axis X. The outer ring 40 comprises a rear surface 46 and a top surface 48. The rear surface 46 is adapted to face the body structure 100, as illustrated in Fig. 4A, Fig. 4B, Fig. 5, Fig. 6, Fig. 8, Fig. 13A or Fig. 13B. The rear surface 46 and/ or the top surface 48 may be substantially flat, as shown in Fig. 4A, Fig. 4B, Fig. 5, Fig. 6 or Fig. 8. In other embodiments, the ear surface 46 and/ or the top surface 48 can be curved, as seen in Fig. 13A, Fig. 13B, Fig. 14A or Fig. 14B.

The sealing element 16 is overmolded on the main body 14. More particularly the sealing element 16 is overmolded on a side or portion or area of the main body 14 designed to face the opening O. The sealing element 16 is overmolded on the main body 14, on such a way that the closing plug 10 can tightly be held in the opening O. The sealing element comprises a first sealing section S1 and a second sealing section S2. The first sealing section S1 is adapted to face the body structure 100 and to provide an axial sealing, wherein the second sealing section S2 is adapted to face the edge defining the opening O and to provide a radial sealing.

As shown in the figures, the sealing element 16 comprises a sealing ring 50 which is provided on the rear surface 46 of the outer ring 40. Thus, when the closing plug 10 is inserted in the opening O, the sealing ring 50 extends between the outer ring 40 and the body structure 100. The sealing ring 50 can define a continuous line or be formed by a plurality of sections. The sealing ring 50 may comprise a protrusion 52 (or a plurality of protrusion) designed to face the body structure and to be pushed against the body structure, as shown in Fig. 4A, Fig. 5 or Fig. 8. The protrusion and/or the sealing ring 50 form(s) thus the first sealing structure S1.

The sealing element 16 also comprises a sealing cover 54 (or cover portion 54), which covers the slots.

The sealing cover 54 may have, as illustrated in Fig. 1, Fig. 3, Fig. 7, Fig. 9, Fig. 12, a plurality of strips 56, each strips 56 covering exactly one slot 36. In others embodiments (not shown), the sealing cover 54 may be provided with few strips, one strip covering more than one slot, or may form one single continuous strip covering all the slots.

The strips 56 extend form a middle or center portion of the sealing element 16 toward the sealing ring 50. The middle portion 58 of the sealing element 16 can have a disc shape, or any other shape. It can entirely cover a face of the bottom 20, or as illustrated in Fig. 1, Fig 9 or Fig. 12 only a portion of it, such that the diameter of the bottom 20 is bigger than the diameter of the middle portion 58. The width of the strip 56 increases for example from the middle portion 58 to the sealing ring 50.

Fig. 2A to Fig. 2B show possible cross sections of an overmolded strip which covers a slot, at different places along the slot. As seen in Fig. 2A, close to the bottom 20, the strip 56 extends entirely in the slot and protrudes from the slot 56. In Fig. 2B, the strip extends just partially in the slot and protrudes from the slot 56. In Fig. 2C, close to the outer ring 40, the strip 56 has an arc-shaped cross section and does not extend in the slot, but above the slot. The arc-shaped cross section allow a possible deformation (or expansion) of the closing plug 10 with lower risk of breaking the seal provided by the sealing element (without uncover the slots).

In a first embodiment, as seen in Fig. 1, Fig. 3, Fig. 4A or Fig. 4B the supporting portion 38 extends from the second end portion 34 of the segment 30. In other words, an end of the supporting portion 38 opposite the outer ring 40 coincides with the second end portion 34. The sealing element 16 extends over at least a portion of the bottom 20, over a first surface of the folding section 24 (in particular covers the slots 56), over the outer surface 44 of the supporting portion 38, and over a portion of the rear surface 46 of the outer ring 40.

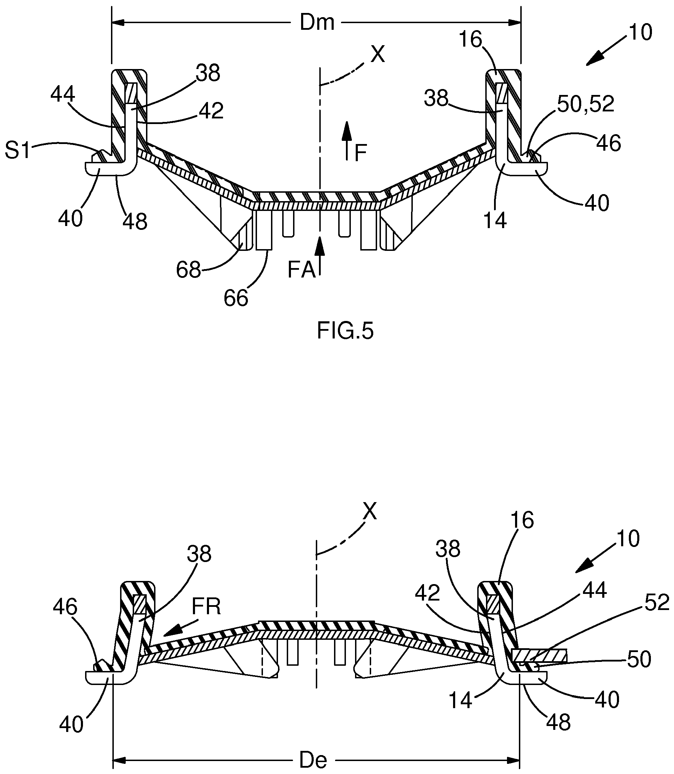

In a second embodiment, as seen in Fig. 5 or Fig. 6 the second end portion 34 of the segment 30 is provided in the middle of the inner surface 42 of the supporting portion 38. The sealing element 16 extends over at least a portion of the bottom 20, over a first surface of the folding section 24 (in particular covers the slots 56), over a portion of the inner surface 42 and over the outer surface 44 of the supporting portion 38, and over the rear surface 46 of the outer ring 40.

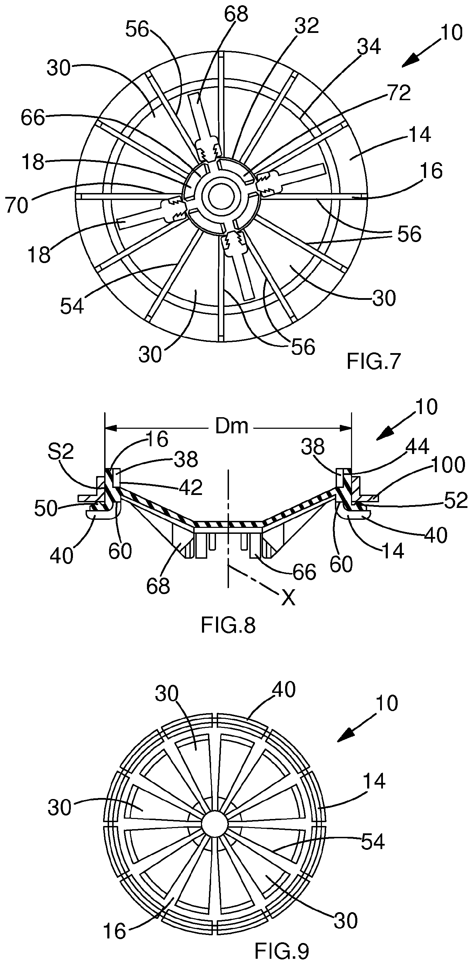

In a third embodiment, illustrated in Fig. 7, Fig. 8 or Fig. 9 the second end portion 34 of the segment 30 is provided in the middle of the inner surface 42 of the supporting portion 38. The supporting portion 38 comprises a plurality of through holes 60 allowing the sealing element 16 to flow through the through holes 60 when being overmolded. Thus, the sealing element 16 extends over at least a portion of the bottom 20 (see Fig. 9), over a first surface of the folding section 24, through the holes 60, over the outer surface 44 of the supporting element 38, and over the rear surface 46 of the outer ring 40.

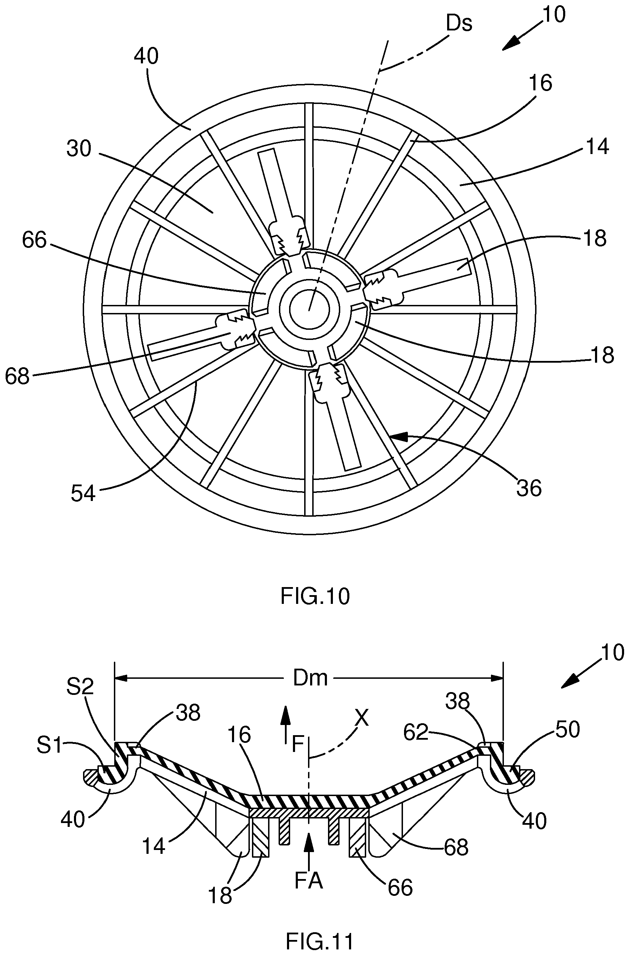

In a fourth embodiment, illustrated in Fig. 10, Fig. 11 or Fig. 12, the supporting portion 38 has a reduced length along the longitudinal axis X. The outer ring 40 extends from the supporting portion with an arc-shaped cross section. The sealing element 16 extends over at least a portion of the bottom 20, over a first surface of the folding section 24, through holes or indentations 62 (see Fig. 11) provided in the supporting portion 38 or extends around an end of the supporting portion 38. The sealing element 16 extends further over the outer surface 44 of the supporting portion 38 and in a recess formed by the arc-shaped cross section of the outer ring 40. In particular, the recess define an annular groove, in which the first sealing section S1 extends and protrudes from. The the outer ring 40 is provided at its edge with a stability collet.

In every embodiments, the portion of the sealing element 16 extending over the outer surface 44 of the supporting portion 38 defines the second sealing section S2. The portion of the sealing element 16 extending over the rear surface 46 of the outer ring 40 or in the annular groove defines the first sealing section S1.

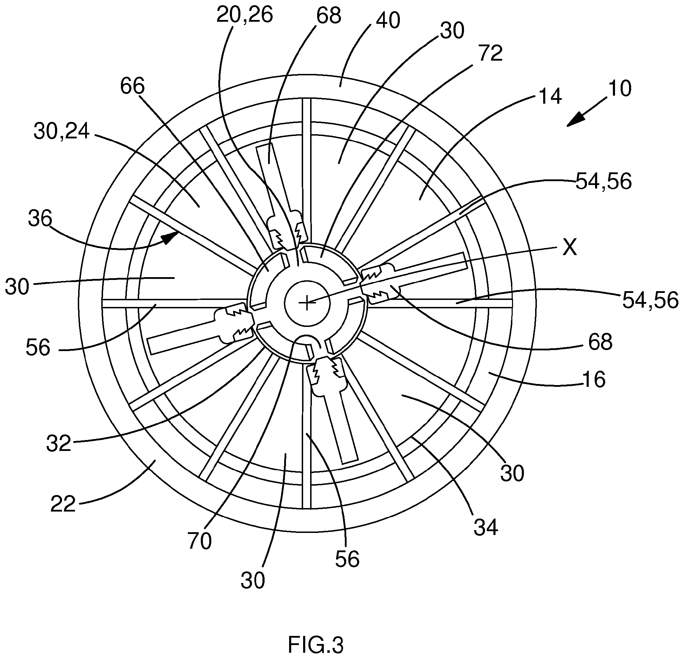

The closing plug 10 further comprises the locking system 18. The locking system 18 has a first locking element 66 provided on the bottom 20 and a second locking element 68 connected to or provided on the outer ring and/or to the folding section. In the illustrated embodiments, the second locking element 68 is provided on the folding section (see for instance Fig. 10 or Fig. 3). The first locking element 66 and the second locking element 68 are able to cooperate together to secure a position of the closing plug 10.

The first locking element 66 comprises for example a plurality of tracks 70 provided with indentations. The tracks 70 are for example, as represented in Fig. 3, Fig. 7, Fig. 10 or Fig. 15 can be formed between two projections provided on the bottom. As seen in the figures, four tracks can be provided. The four tracks 70 are formed between four projections 72. Each projection 72 forms a quarter of a circle.

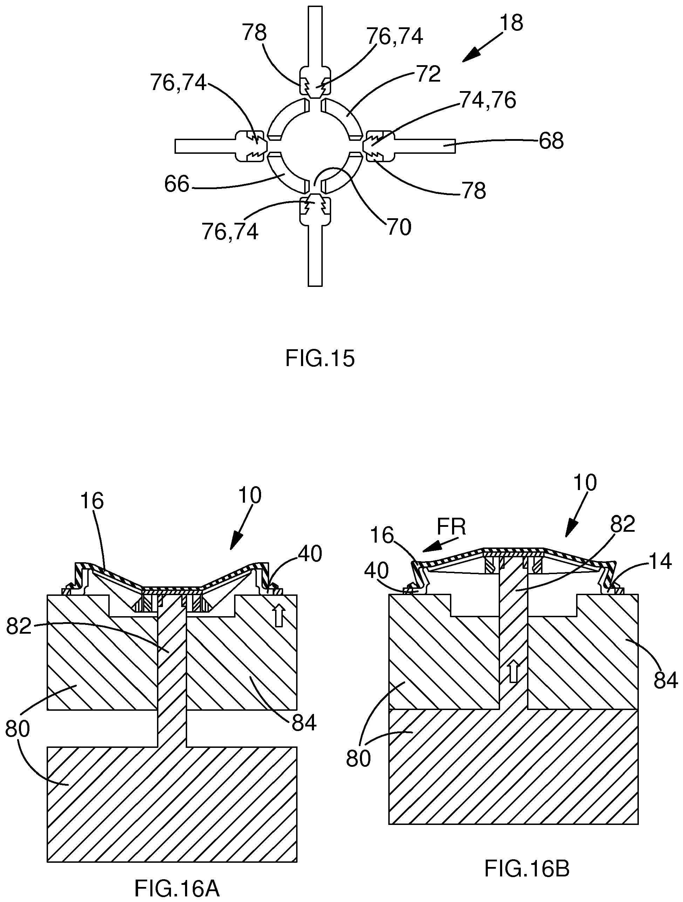

Each track 70 cooperate with a toothed tongue 74. The toothed tongues 74 define a holding section 76 of the second locking element 68. The second locking element 68 further comprises a locking section 78. The tracks 70, the toothed tongues 74 and the locking section 78 are shown more specifically in Fig. 15.

The sealing element 16 allows the closing plug 10 to be stretched and the first and second locking elements 66, 68 can cooperate together to secure a stretched position of the closing plug.

The closing plugs 10 illustrated in Fig. 4A, Fig. 5, Fig. 8 or Fig. 11 is in a rest position and the bottom 20 is in a mounting position. In the rest position of the closing plug 10, said closing plug 10 can be inserted in the opening O. In the rest position, the second sealing section S2 comprises a mounting diameter Dm. The mounting diameter Dm corresponds to the largest diameter of the second sealing section S2 when the bottom 20 is in the mounting position.

In order to provide a tight closure of the opening, the closing plug 10 is moved from the rest position to the stretched position, in which the bottom 20 is in an expansion position and the closing plug is firmly held in the opening. In the expansion position of the bottom, the second sealing section S2 comprises an expansion diameter De. The expansion diameter corresponds to the largest diameter of the second sealing section S2 when the closing plug 10 extends in the opening and the bottom 20 is in the expansion position. The expansion diameter De is larger than the mounting diameter Dm.

In other words, the closing plug 10 is used as follow: in the rest position it can be inserted with low force into the opening O of the structure body 100 and can then, by applying pressure to a portion of the plug (and more particularly to the bottom 20), be adjusted to a stretched position, in which the closing plug 10 reliably seals against the edge of the opening O.

To allow the movement of the closing plug from the rest position to the stretched position, the bottom is actuated (manually or through an automate) from a mounting position (illustrated in Fig. 4A, Fig. 5, Fig. 8 or Fig. 11) to an expansion position (illustrated in Fig. 4B, Fig. 6, Fig. 13B). More particularly, once the closing plug is inserted in the opening O, with the first sealing section S1 facing the body structure 100 or resting against the body structure 100, the bottom 20 is pushed along the longitudinal axis X in the direction of the opening O. The bottom is thus pushed away from the outer ring. This is effected with an axial force FA, which is oriented in the direction of the axial direction of the closing plug 10. In the process, the folding section 24 is deflected in a direction according to arrow F (i.e. away from the collar 22), so that the supporting portion 38 which in the rest position lies sensibly parallel to the longitudinal axis X, now form a non-zero angle with the longitudinal axis X and exert a radial expansion force or radial force FR on the sealing element 16 (and more particularly on the second sealing section S2). The folding section 24 pushes the supporting portion 38 outward. The supporting portion 38 and the second sealing section S2 overmolded on the supporting portion 38 are widened outward, so that the second sealing section S2 is pressed against the edge of the opening O.

The rest position of the closing plug 10 according to the first embodiment is illustrated in Fig. 4A. The supporting portion 38 is inserted in the opening O and lies parallel to the longitudinal axis X. The bottom 20 is in the mounting position and is for example above the opening O. Fig. 4B illustrates the closing plug 10 in the stretched position with the bottom 20 in the expansion position. The diameter of the folding section 24 is greater than in the rest position. More particularly, the second end portions 34 of the segments 30 exert a radially outward force on the supporting portion 38.

Fig. 5A shows the second embodiment of the closing plug 10 in the rest position. The supporting portion 38 lies parallel to the longitudinal axis X. The bottom 20 is in the mounting position and is axially upset relative to the collar. In the stretched position illustrated in Fig. 6, the closing plug 10 according to the second embodiment comprises a supporting portion 38 having a conical shape. In other words the supporting portion 38 is not cylindrical anymore. The bottom 20 extends between an end portion of the supporting portion and the collar 22.

Fig. 8 shows the third embodiment of the closing plug in the rest position. The supporting portion 38 is inserted in the opening O and lies parallel to the longitudinal axis X.

Fig. 11 shows the fourth embodiment of the closing plug 10 in the rest position, and Fig. 13A is a detailed view with the closing plug 10 according to the fourth embodiment inserted in the opening in the rest position. Arrow D Fig. 13B shows the motion of the supporting portion 38 and of the outer ring 40 following the movement of the bottom from the mounting position to the expansion position.

In order to secure the position of the bottom and of the closing plug, and to ensure that the closing plug 10 is firmly held in the opening O, the first and second locking elements 66 and 68 cooperate together when the bottom 20 is in the expansion position. More particularly, the toothed tongue 74 cooperate with the track 70 (or with indentations of the track 70) during the movement of the bottom 20 from the mounting position to the expansion position. When the bottom 20 arrives in the expansion position at least one tooth of the toothed tongue 74 cooperate with a corresponding indentation in the track 70. The bottom 20 is thus hold in the expansion position. The locking system comprises further the locking section 78, which secures the position of the tongue 74 in the track 70 by avoiding any further move of the tongue regarding to the track. The locking section 78 is for example a lever provided beyond or above the tongue to lock the detent or notching of the tongue 74 and the track 70, as illustrated in Fig. 15.

An end of the supporting portion 38 can be provided with a hook as illustrated in Fig. 14A. In the expansion position of the bottom 20, the hook further secure the stretched position of the closing plug 10 by cooperating with an edge of the body structure 100, as illustrated in Fig. 14B. The body structure 100 (or more particularly the edge of the opening O) is thus sandwiched between the hook 86 and the outer ring 40 or the first sealing section S1.

The closing plug 10 can be installed manually. The closing plug 10 may also be installed by an automate 80, as illustrated in Fig. 16A and Fig. 16B. The closing plug 10 is first installed in the machine, with the bottom being in the mounting position and cooperating with the end of a piston rod and the collar resting against a surface of a housing 84. The closing plug 10 is retained in the automate 80 through mechanicals or pneumatics means. First automate 80 inserts the closing plug in the opening O by inserting the supporting portion 38 in the opening O and pressing the collar 22 against the body structure. The bottom 20 is then actuated by the piston rod 82 to reach the expansion position, as seen in Fig. 16B.

## Claims

1. Closing plug (10) for sealingly closing an opening (O), in particular an opening (O) provided on a body structure (100) of an automobile, comprising:
a. a main body (14), with:
i. a bottom (20)
ii. a collar (22) with a supporting portion (38) extending along a longitudinal axis (X) and an outer ring (40) with a rear surface adapted to face the body structure (100) and a top surface opposite the rear surface, wherein the collar (22) surrounds the bottom (20),
iii. a folding section (24) extending between the bottom (20) and the collar (22),
b. a sealing element (16), wherein the sealing element (16) is overmolded on the main body (14), wherein the sealing element (16) comprises a first sealing section (S1) and a second sealing section (S2), wherein the first sealing section (S1) extends at least partially on the rear surface, and wherein the second sealing section (S2) is provided on the supporting portion (38) of the collar (22),
c. a locking system (18) having a first locking element (66) provided on the bottom (20) and a second locking element (68) connected to the outer ring (40) and/or the folding section (24),
wherein the bottom (20) is movable relative to the collar (22) along the longitudinal axis (X) between
- a mounting position in which:
∘ the second sealing section (S2) has a mounting diameter, and
∘ the first locking element (66) is at a non-zero distance of the second locking element (68), and
- an expansion position in which:
∘ the bottom (20) exerts through the folding section (24) a radial force on the collar (22) and in which the second sealing section (S2) has an expansion diameter, said expansion diameter being larger than said mounting diameter, and
o the first locking element (66) cooperate with the second locking element (68) to secure the expansion position.

2. Closing plug (10) according to claim 1, wherein the folding section (24) comprises a plurality of segments (30) extending from the bottom (20) to the collar (22) and separated by slots.

3. Closing plug (10) according to claim 2, wherein each segment has a constant length and a variable width.

4. Closing plug (10) according to claim 2 or 3, wherein the sealing element (16) comprises a cover portion (54) which covers the slots.

5. Closing plug (10) according to claim 4, wherein the cover portion (54) extends longitudinally along a radial direction, the section of the cover portion being variable along the radial direction between the bottom (20) and the collar (22), wherein the section of the cover portion proximate to the bottom (20) extends at least partially in the slot, and wherein the section of the cover portion proximate to the collar (22) is arc-shaped and does not extend in the slot.

6. Closing plug (10) according to any of claims 1 to 5, wherein the sealing element (16) is in a first material, the main body (14) is in a second material, the first material being more flexible than the second material.

7. Closing plug (10) according to any of claims 1 to 6 wherein the second locking element (68) comprises a locking section and a holding section, wherein the first locking element (66) comprises a receiving track (70), wherein in the expansion position the receiving track cooperates with the holding section and the locking section to secure the position of the first and second locking elements (66, 68).

8. Closing plug (10) according to any of claims 1 to 7, wherein the outer ring (40) comprises an arc-shaped section and define an annular groove, and wherein the first sealing section (S1) entirely fill the annular groove.

9. Closing plug (10) according to any of claims 1 to 8, wherein the folding section (24) extends between the bottom (20) and the outer ring (40).

10. Closing plug (10) according to any of claims 1 to 9, wherein the bottom (20) has a circular general shape with a first surface and a second surface opposite the first surface, wherein the first surface is provided with the first locking element (66), and wherein the second surface is at least partially overmoulded by the sealing element (16).

11. Closing plug (10) according to any of claims 1 to 10, wherein the first sealing section (S1) comprises an annular protrusion.

12. Closing plug (10) according to any of claims 1 to 11, wherein the bottom (20) is axially offset along the longitudinal axis (X) from the collar (22) in the mounting position.

13. Closing plug (10) according to any of claims 1 to 12, wherein the supporting portion (38) comprises an inner surface facing the bottom (20) and an outer surface opposite the inner surface, and wherein the sealing element (16) is overmoulded on the outer surface.

14. Closing plug (10) according to claim 13, wherein the sealing element (16) is overmoulded on the inner surface.

15. Closing arrangement comprising a closing plug (10) according to any of claims 1 to 14, and a body structure (100), wherein the body structure (100) comprises a first surface, a second surface opposite the first surface and an opening (O), wherein the closing plug (10) extends in the opening (O), wherein the first sealing section (S1) is facing the first surface, and wherein the second sealing section (S2) is facing the edges of the opening (O).
